# EUROPÄISCHE PATENTSCHRIFT

(11) **EP 1 269 608 B1**
(45) Veröffentlichungstag und Bekanntmachung des Hinweises auf die Patenterteilung: **16.02.2005**
(21) Anmeldenummer: 01919388.7
(22) Anmeldetag: 15.03.2001
(51) Int. Cl.: H02K 15/02, H02K 1/16

(54) **VORRICHTUNG ZUR HERSTELLUNG VON AUS BLECHTEILEN BESTEHENDEN PAKETEN**
APPARATUS FOR PRODUCING LAMINATED CORES CONSISTING OF SHEET PARTS
APPAREIL DE PRODUCTION DE PAQUETS FORMES D'ELEMENTS EN TOLE

(30) Priorität: 21.03.2000 DE 10013690
(43) Veröffentlichungstag der Anmeldung: 02.01.2003
(73) Patentinhaber: Schuler Pressen GmbH & Co. KG, 73033 Göppingen (DE); Roos & Kübler GmbH & Co. KG, 73061 Ebersbach, Fils (DE)
(72) Erfinder: BAREIS, Alfred, 73066 Uhingen (DE); RÖVER, Markus, 70372 Stuttgart (DE); DRESCHER, Timo, 73095 Albershausen (DE); KAUFFMANN, Jochen, 73061 Ebersbach (DE)
(74) Vertreter: Rüger, Barthelt & Abel Patentanwälte
(86) Internationale Anmeldenummer: PCT/EP2001/002881
(87) Internationale Veröffentlichungsnummer: WO 2001/071892

(56) Entgegenhaltungen:
- EP-A- 0 793 332
- FR-A- 2 612 703
- US-A- 4 162 734
- PATENT ABSTRACTS OF JAPAN vol. 2000, no. 01, 31. Januar 2000 (2000-01-31) & JP 11 289728 A (NISSAN MOTOR CO LTD), 19. Oktober 1999 (1999-10-19)

## Beschreibung

Die Erfindung betrifft eine Vorrichtung zur Herstellung von Paketen, insbesondere aus von in Kreisringsegmente zerlegten Dynamoblechen.

Ein entsprechende Vorrichtung ist z.B. bekannt aus der DE 30 27 987 C2. Dort wird ein Verfahren und eine Einrichtung zum Paketieren vorgestellt, mit der Kreisringsegmente automatisch zu einem Generatorring gestapelt, ausgerichtet, gepreßt und verklammert werden. Gleichzeitig wird bei diesem beschriebenen Verfahren eine Überlappung der Kreisringsegmente gezeigt.

Nachteilig daran ist, daß zur Fertigung eines derartigen Paketes ein außergewöhnlich hoher apparatetechnischer Aufwand getrieben werden muß, was die Anlage sehr teuer macht. Weiter ist ein Verfahren zur Herstellung von Paketen ringförmiger magnetischer oder anderer Bleche für kleine oder mittlere elektrische Maschinen, insbesondere Wechselstromgeneratoren für Motorfahrzeuge, wobei von gesteuerten Blechen ausgegangen wird, die noch innen offene Schlitze aufweisen, wobei durch Stanzen bogenförmige Blechsegmente mit einer Umfangslänge, welche einen Winkel α = 360°/n entspricht, geschnitten werden, aus der EP 136 740 B1 bekannt.

Hierbei ist von Nachteil, daß erneut ein hoher apparatetechnischer Aufwand betrieben werden muß, um zum fertigen Paket zu gelangen, was das Endprodukt teurer macht.

Desweiteren ist aus Oehler/Kaiser; Schnitt-, Stanz- und Ziehwerkeuge; Springer Verlag 1962 bekannt, an Mittel- und Grobblechen durch teilweises Eindringen des Schnittstempels in das Blech an der. anderen Seite hervortretende Warzen zu erzeugen, wobei bei derartigen Verfahren auch Nietverbindungen hergestellt werden, S. 43, Abb. 45-48.

Ebenfalls bekannt ist ein aus der DE 31 50 770 A1 ein Verfahren zur Herstellung von aus Blechteilen bestehendes Paket, bei dem die Blechteile aneinandergereiht und miteinander zum Paket verbunden werden. Hier werden einstückige Bleche verwendet, bei denen von Nachteil ist, daß der Anteil an Verschnitt relativ hoch ist.

Aus der US-A-4 162 734 ist eine Stanzpaketiereinrichtung bekannt, die eine Matrize zum Ausstanzen von Blechteilen aufweist. Unterhalb der Matrize ist eine Stapeleinrichtung mit drehbarem Stapeldorn angeordnet. Damit können die von der Matrize abgegebenen z.B. ringförmigen Bleche, in unterschiedlichen Drehpositionen übereinander aufgestapelt weiden, wodurch ein gewünschter Versatz innerhalb des Stapels entsteht. Der Dom ist höhenverstellbar ausgebildet, so dass er nach unten aus dem gebildeten Blechstapel herausgefahren werden kann, um den Blechstapel an eine Bandfördereinrichtung zu übergeben, die ihn seitlich wegführt.

Diese Anordnung ist relativ aufwendig und benötigt eine große Bauhöhe für die unterhalb der Matrize anzuordnende Stapeleinrichtung.

Es ist somit Aufgabe der Erfindung, eine Vorrichtung der eingangs genannten Art dahingehend zu verbessern, daß ein einfaches und billigeres sowie ein das eingesetzte Material schonendes Verfahren nebst Vorrichtung zur Durchführung desselben geschaffen wird.

Erfindungsgemäß wird diese Aufgabe durch die Merkmale von Anspruch 1 gelöst.

Hierbei ist von Vorteil, daß zum einen fertig bearbeitete Pakete ohne Handarbeit entstehen, zum anderen ergeben sich durch die beschriebene Erzeugung der Pakete zweistellige Prozenteinsparungen beim Materialeinsatz.

Vorteilhafte Weiterbildungen ergeben sich aus den Unteransprüchen.

Es folgt die Beschreibung der Figuren:
- Figur 1: eine perspektivische Darstellung eines Paketes
- Figur 2: einen Schnitt durch die Vorrichtung
- Figur 3a, b: je einen Schnitt durch ein Ausführungsbeispiel einer Matrize
- Figur 4: eine Seitenansicht einer Gesamtanlage.

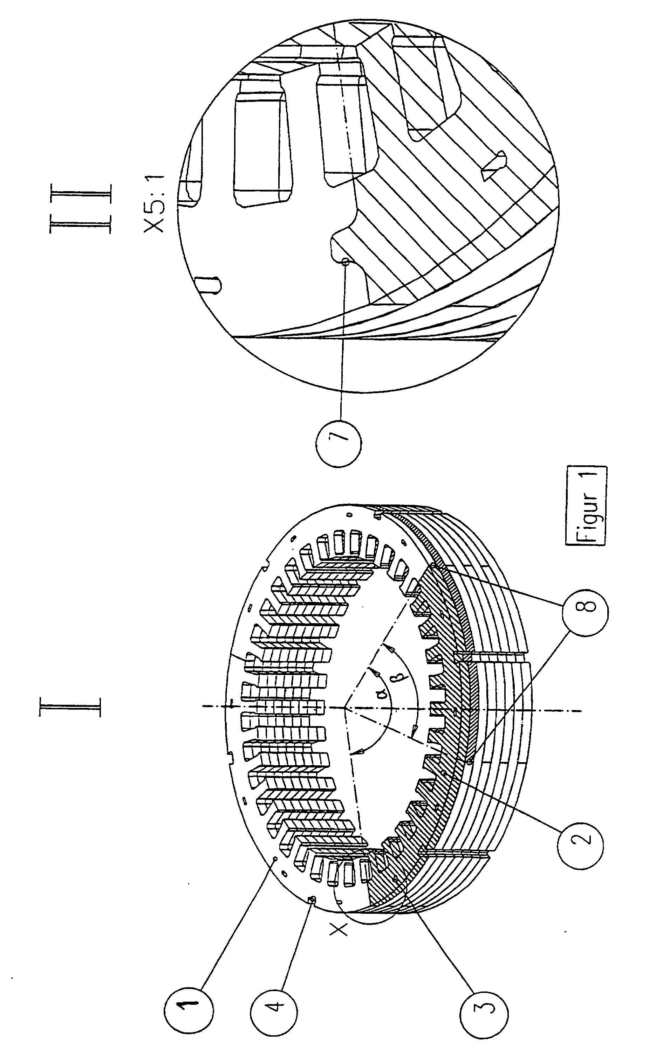

In Figur 1 wird ein stanzpaketierter Blechstapel aus Kreisringsegmentblechen gezeigt.

Die Blechstapel werden aus mehreren Lagen von ringförmig zusammengelegten Kreisringblechsegmenten gebildet. Eine Lage besteht aus n Segmenten, wobei jedes Segment einen Winkel von (360/n)° beschreibt. In der Praxis dürften 3-6 Segmente pro Lage die Regel sein. Im folgenden wird das Verfahren anhand des Beispiels von 3 Segmenten pro Lage ä 120° beschrieben.

Bei dem Verfahren werden aus einem Blechstreifen auf einer Presse Blechteilsegmente 2 in eine Matrize gestanzt. Jedes Blechteilsegment hat zwei oder mehr Verbindungselemente für das Stanzpaketieren 3.

Das Blechteilsegment 2 wird beim Schneiden über Blechteilhaltekonturen 4 horizontal fixiert.

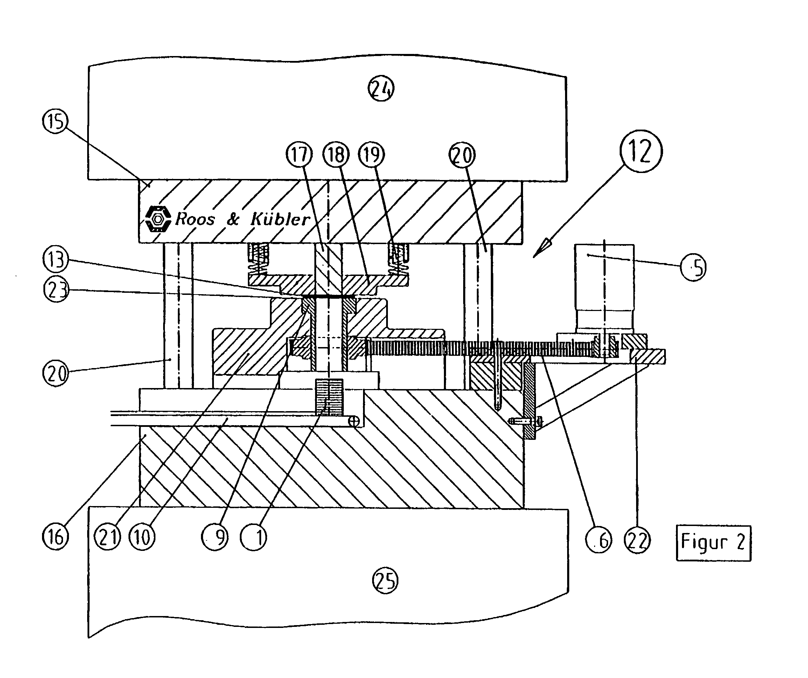

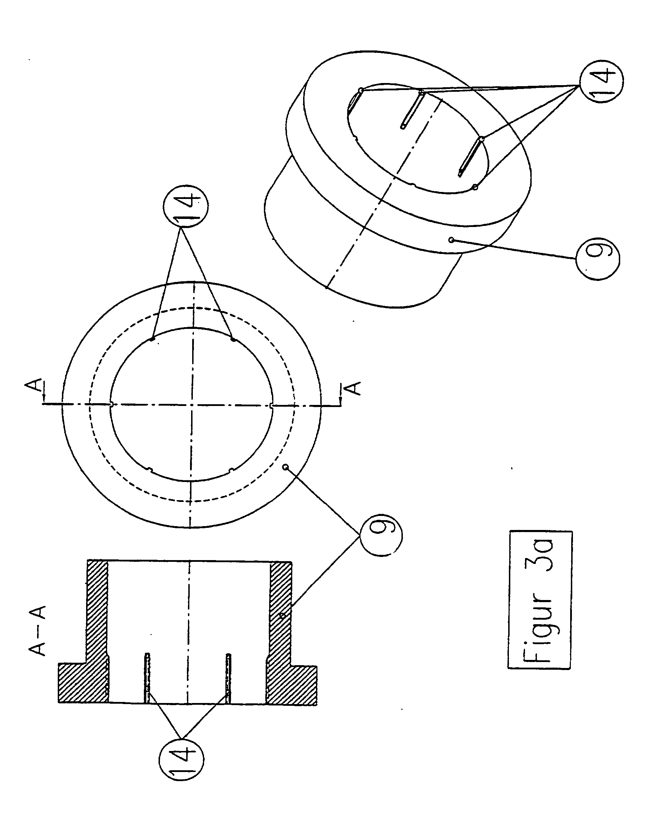

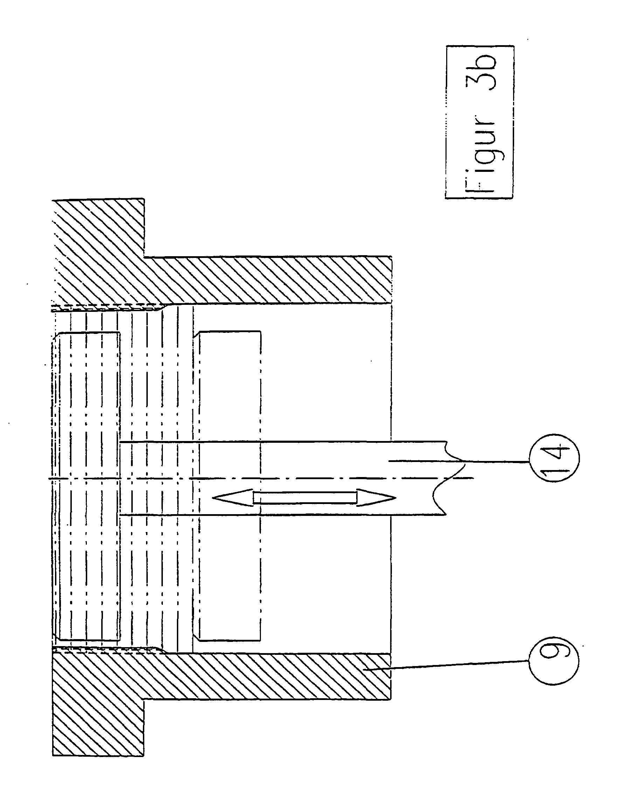

Falls die Blechteilhaltekonturen aus elektromagnetischen Gründen nicht zulässig sind, werden die Blechteilsegmente in einer nicht dargestellten Alternative mit einem drehbar gelagerten Innendorn gehalten. Vertikal werden die Segmente in der Matrize 9 (Fig 3a, 3b, 2) mit Gegendruck - der über Zylinder oder Bremsringe aufgebracht wird - von unten gehalten. Die Matrize 9 wird im Bereich um den oberen Totpunkt der Presse über einen Servomotor oder einen anderen, z.B. mechanischen Antrieb 5 mit Hilfe eines Zahnriemens 6 oder einer anderen Transmissionsvorrichtung um 120° gedreht, wie dies in Figur 2 dargestellt wird.

Der gesamte Vorgang wird mit zwei weiteren Blechteilsegmenten 2 wiederholt, bis die erste Lage des Stapels fertig ist. Da die Lage bei den ersten beiden Blechteilsegmenten nicht vollstandig ist. wird das Abkippen des Paketes 1 durch eine Kompensationsvorrichtung im Stempel verhindert. Die Segmente einer Lage können in einer alternativen Ausgestaltung zusätzlich mit speziellen Stanzkonturen 7 miteinander verbunden werden

Dann wird die Matrize einmal nur um 60° gedreht, damit die nächste Blechlage backsteinartig versetzt auf der ersten liegt 8. Die Segmente der zweiten Lage halten mit denen der ersten Lage über die zwei Verbindungselemente zusammen (Prinzip des Stanzpaketierens).

Diese Vorgehensweise wird solange wiederholt, bis die gewünschte Pakethöhe erreicht ist. Durch das beim Stanzpaketieren übliche Verfahren der Trennstempel werden die ersten Segmente eines neuen Pakets so gestanzt, daß sie sich nicht mit der letzten Lage in der Matrize verbinden können. Sobald der Gegendruck von unten nachläßt oder aktiv aufgehoben wird. fällt das Paket durch die Matrize 9 auf eine Ablage und wird aus der Presse abtransportiert 10.

Das Paket 1 wird auf der Presse und dem beschriebenen Werkzeug komplett fertig bearbeitet. Ein weiterer Vorteil dieses Verfahrens ist eine Materialersparnis zur herkömmlichen Statorfertigung ohne Rotor im Bereich von bis zu 40%.

Es sind bereits Systeme im Einsatz, in denen Segmente auf einer Presse 11 gestanzt werden und diese außerhalb der Presse 11 zu einem Stapel gelegt werden Es gibt weiterhin Lösungen, in denen gerade Segmente paketiert werden und außerhalb der Presse in Form gebogen werden.

Das Paket 1, das in Figur 1 dargestellt ist, besteht im wesentlichen aus überlappend angeordneten Blechteilsegmenten 2, wie dies durch die schraffierten Bleche deutlich gemacht wird.

Jedes Blechteilsegment 2 einer Blechteilebene verfügt über Verbindungselemente 3, die mit den Verbindungselementen der anlegenden Blechteilsegmente einer anderen Blechteilebene korrespondieren. Im vorliegenden Ausführungsbeispiel gemäß Figur 1 werden die Verbindungslemente 3 mittels des Stanzpaketierens in der Weise erzeugt, daß die Verbindungselemente 3 der überlappend angeordneten Blechteilsegmente 2 miteinander in Verbindung treten. Damit die 3 Blechteilsegmente 2 im Stanzwerkzeug zu einem kreisrunden Blechteil zusammengefügt werden können, weist jedes Blechteilesegment 2 sogenannte Blechteilhaltekonturen 4 auf, mittels derer die Blechteilsegmente 2 in einer drehbar ausgeführten Matrize 9, die, wie in Fig. 3a dargestellt, an der Innenseite der Matrize 9 angeordnet sind, in der Weise korrespondieren, daß das Blechteilsegment 2 durch Blechteilhaltekontur 4 und -vorrichtung 14 definiert gehalten und gedreht werden kann.

In einer alternativen Darstellung gemäß Figur 1, ist an den Stirnseiten der Blechteilsegmente 2, die sich in der gleichen Ebene befinden, eine zusätzliche Stanzkontur 7 vorgesehen, die an den Stirnseiten der anstoßenden Blechteilsegmente 2 jeweils eine korrespondierende Entsprechung (männlich/weiblich) haben.

Die einzelnen Blechlagen, 8 sind gegeneinander versetzt. Dieser Versatz, der zwisehen den Kontaktebenen der Blechteilsegmente anliegender Blechteile auftritt, ist in Figur 1 als Winkel β dargestellt. Der Winkel β muß so groß sein, daß beim Stanzpaketieren trotz Versatz die Verbindungselemente 3 mit den Verbindungselementen des anliegenden Blechteils in Eingriff gelangen. Ein spezielles Beispiel wurde bereits weiter oben erwähnt, hierbei ist α = 120° und β = 60°. In einer weiteren Ausführungsform sind die Verbindungselemente 3 als sogenannte Nietlöcher ausgeführt, durch die handelsübliche Nieten gesteckt werden, um das Paket 1 anschließend mittels eines Nietvorgangs fertig zu stellen. In einer anderen Ausgestaltung ist vorgesehen, die Blechteile mittels einer Schweißung zu verbinden. Dies kann sowohl im Bereich der Verbindungselemente 3 als auch an der Außenkontur des Paketes 1 erfolgen. Weiterhin ist in einer Ausgestaltung vorgesehen, die Blechteile in Ergänzung einer vorstehenden Verbindungsarten oder aber eigenständig durch Klebstoff zu verbinden.

Figur 2 zeigt die Vorrichtung zur Herstellung von Blechpaketen aus Blechteilsegmenten im Schnitt in Blechtransportrichtung. Die dargestellte Vorrichtung besteht im wesentlichen aus einem Stanzwerkzeug 12 , das ein Werkzeugoberteil 15 und ein Werkzeugunterteil 16 aufweist. Das Werkzeugoberteil 15 ist an der Stößelplatte 24 befestigt, das Werkzeugunterteil 16 ist an der Tischplatte 25 angeordnet.

Eine einen Stempel 17 enthaltende Abstreiferplatte 18 wird mittels mehrerer Federn 19 vom Werkzeugoberteil 15 beabstandet und ist gegen dieses verschieblich angeordnet. Werkzeugoberteil 15 und Werkzeugunterteil 16 sind über Führungssäulen 20 gegeneinander verschieblich angeordnet Auf dem Werkzeugunterteil 16 befindet sich die Matrizenhalteplatte 21. Die Matrizenhalteplatte 21 enthält eine Matrize 9. Die Matrize 9 ist drehbar gelagert und wird von einem Zahnriemen 6 bewegt.

Der die Matrize 9 bewegende Zahnriemen 6 wird von einem auf einem Gestell 22 angeordneten Antrieb 5. z.B. einem Elektromotor, angetrieben. In einer alternativen Ausgestaltung ist vorgesehen, die definierte Drehung (z.B. 120°/60°) mittels eines mechanischen Antriebs im Werkzeug selbst zu integrieren, wie dies bereits von gedrallten Paketen bekannt ist. Unterhalb der drehbaren Matrize 9 ist ein Abtransport 10, der in Figur 2 als Förderband ausgestaltet ist, angeordnet, auf dem die fertigen Pakete 1 abtransportiert werden. Zwischen Abstreiferplatte 18 und der Matrizenoberseite, die mit der Werkzeugunterteil/-oberseite fluchtet, befindet sich die Einlaufebene 23, in der das Blech 13 in den Einflußbereich von Stempel 17 und der korrespondierenden Matrize 9 gelangt. In einer alternativen Ausgestaltung ist vorgesehen, daß das Paket entweder in der Vorrichtung gemäß Figur 2. 4 geschweißt wird. Hierbei ist denkbar, daß jede Blechlage mit der nächstfolgenden über die Verbindungselemente verschweißt wird. Weiterhin ist eine Schweißung an der Außenhaut des Pakets vorgesehen.

In Figur 3a ist die drehbare Matrize 9 im Schnitt sowie in einer Draufsicht dargestellt. Hierbei wird die Anordnung der Blechteilhaltevorrichtung 14 gezeigt, die im vorliegenden Ausführungsbeispiel als sogenannte Schwalbenschwänze dargestellt sind.

Die im Schnitt und in der Draufsicht dargestellte drehbare Matrize 9 gemäß Figur 3b zeigt ebenfalls eine Blechteilhaltevorrichtung 14, die allerdings in der vorliegenden Ausführungsform als sogenannter Gegenhalter dargestellt wird. Der gezeigte Gegenhalter drückt von unten gegen das größer werdende und nach unten drängende Paket und unterstützt somit die Fertigung des Pakets. Der Gegenhalter ist längsverschiedlich ausgeführt und gibt bei Erreichen der vorgesehenen Paketgröße dieses frei.

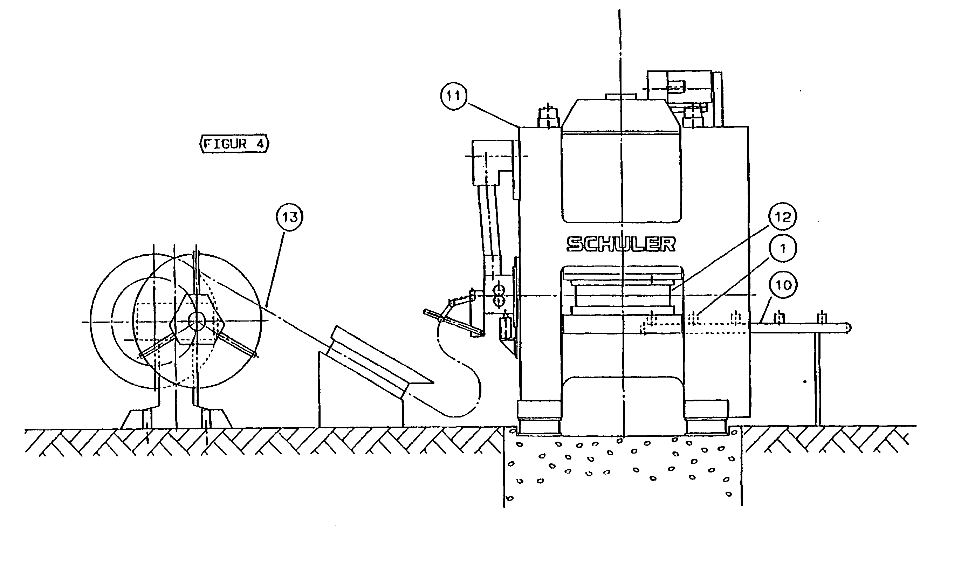

Figur 4 zeigt schematisch eine Vorrichtung zur Herstellung derartiger Pakete. Dabei wird auf einer Haspel befindliches Blech 13 in eine Presse 11 geführt. In der Presse 11 befindet sich ein Schnittfolgewerkzeug 12, das in der bereits weiter oben beschriebenen Weise Statorpakete anfertigt, die nach Erreichen einer voreingestellten Pakethöhe auf einen Abtransport 10 gelangen.

## Patentansprüche

1. Vorrichtung, umfassend wenigstens eine Stanzvorrichtung (11) für die Erzeugung von Blechteilsegmenten (2) mit wenigstens einer Matrize (9), und umfassend wenigstens eine Stanzpaketiervorrichtung und/oder wenigstens eine Klebe- und/oder wenigstens eine Schweißvorrichtung,
zur Herstellung von aus Blechteilen bestehenden Paketen, wobei dabei die Blechteile aneinandergereiht und miteinander zum Paket (1) verbunden werden, wobei durch Stanzen im wesentlichen bogenförmige Blechteilsegmente (2) mit einer Umfangslänge, die einem Winkel α = 360°/n entspricht, wobei n eine ganze positive Zahl ist und größer oder gleich zwei ist, erzeugt werden, wobei n dieser Blechteilsegmente (2) in einer Ebene zu einem Blechteil angeordnet werden und wobei die aneinandergereihten Blechteile mittels wenigstens einem Verbindungselement (3) verbunden werden,
**dadurch gekennzeichnet, daß** die Matrize (9) drehbar ausgefürt ist.

2. Vorrichtung nach Anspruch 1, **dadurch gekennzeichnet, daß** die Matrize (9) wenigstens eine Blechteilsegment- und/oder Blechteilhaltevorrichtung (14) aufweist.

3. Vorrichtung nach Anspruch 2, **dadurch gekennzeichnet, daß** die Blechteilhaltevorrichtung form- und/oder kraftschlüssig ausgebildet ist.

4. Vorrichtung nach Anspruch 1, **dadurch gekennzeichnet, daß** eine Einrichtung vorgesehen ist, um zur Stanzpaketterung wenigstens ein Verbindungselement (3) pro Blechteilsegment (2) anzuordnen.

5. Vorrichtung nach einem oder mehreren der vorgenannten Ansprüche, **dadurch gekennzeichnet, daß** die Vorrichtung wenigstens einen Innendom zur Halterung der Blechteilsegmente aufweist, wobei der Innendorn drehbar ausgeführt ist.

## Claims

1. Device comprising at least one punching device (11) for generating sheet metal part segments (2) with at least one die (9), and comprising at least one punch packing device and/or at least one gluing device and/or at least one welding device, for the production of packs consisting of sheet metal parts, wherein the sheet metal parts are arranged in adjacent rows and connected together to form the pack (1), wherein essentially arc-shaped sheet metal part segments (2) with a peripheral length corresponding to an angle α = 360°/n, wherein n is a whole positive number and is greater than or equal to 2, are generated by punching, wherein n of these sheet metal part segments (2) are arranged in a plane to a sheet metal part and wherein the sheet metal parts arranged in adjacent rows are connected by means of at least one connecting element (3), **characterised in that** the die (9) is configured to be rotatable.

2. Device according to Claim 1, **characterised in that** the die (9) has at least one sheet metal part segment and/or sheet metal part holding device (14).

3. Device according to Claim 2, **characterised in that** the sheet metal part holding device is configured as a positive and/or non-positive holding device.

4. Device according to Claim 1, **characterised in that** a means is provided to arrange at least one connecting element (3) per sheet metal part segment (2) for punch packing.

5. Device according to one or more of the preceding claims, **characterised in that** the device has at least one inside mandrel to hold the sheet metal part segments, wherein the inside mandrel is configured to be rotatable.

## Revendications

1. Dispositif comprenant au moins un dispositif de découpage (11) avec au moins une matrice (9) pour la fabrication de segments de tôles (2), au moins un dispositif de formation de paquets par poinçonnage et/ou un dispositif de collage et/ou un dispositif de soudage pour la fabrication de paquets de tôles, les tôles étant empilées et liées entre elles pour former un paquet (1), essentiellement des segments de tôles (2) courbes avec une longueur de circonférence qui correspond à un angle α=360°/n, n étant un nombre entier positif supérieur ou égal à deux, étant produits par découpage à la presse, n desdits segments de tôles (2) étant disposés dans un plan pour former une tôle et les tôles empilées étant liées à l'aide d'au moins un élément d'assemblage (3), **caractérisé par le fait que** la matrice (9) est conçue de manière à pouvoir tourner.

2. Dispositif selon la revendication 1, **caractérisé par le fait que** la matrice (9) présente au moins un dispositif de retenue de segments de tôles et/ou un dispositif de retenue de tôles (14).

3. Dispositif selon la revendication 2, **caractérisé par le fait que** le dispositif de retenue de tôles est du type à complémentarité de formes et/ou à serrage.

4. Dispositif selon la revendication 1, **caractérisé par le fait qu'**il est prévu un dispositif pour la formation de paquets afin de disposer au moins un élément d'assemblage (3) par segment de tôles (2).

5. Dispositif selon une ou plusieurs des revendications précédentes, **caractérisé par le fait que** le dispositif comporte au moins mandrin intérieur pour la retenue des segments de tôles, le mandrin intérieur pouvant tourner.
